# EUROPÄISCHE PATENTSCHRIFT

(11) **EP 2 018 265 B1**
(45) Veröffentlichungstag und Bekanntmachung des Hinweises auf die Patenterteilung: **27.04.2016**
(21) Anmeldenummer: 07725297.1
(22) Anmeldetag: 16.05.2007
(51) Int. Cl.: B32B 1/02, B32B 27/08, B32B 27/32, B32B 27/34, B32B 27/30, B65D 25/14, B32B 3/08, F42B 39/00, F42B 39/14

(54) **MEHRSCHICHTIGER KUNSTSTOFF-BEHÄLTER**
MULTILAYER PLASTIC CONTAINER
CONTENANT EN PLASTIQUE MULTICOUCHE

(30) Priorität: 18.05.2006 DE 202006008091 U
(43) Veröffentlichungstag der Anmeldung: 28.01.2009
(73) Patentinhaber: Mauser-Werke GmbH, 50321 Brühl (DE)
(72) Erfinder: SCHMIDT, Klaus-Peter, 53123 Bonn (DE); SCHÜLLER, Frank, 50226 Frechen (DE); SCHUBBACH, Reinhard, 83346 Bergen (DE)
(86) Internationale Anmeldenummer: PCT/EP2007/004382
(87) Internationale Veröffentlichungsnummer: WO 2007/134781

(56) Entgegenhaltungen:
- EP-A- 1 401 071
- WO-A-00/47412
- WO-A-03/093116
- WO-A-2005/040269
- DE-U1- 20 206 435

## Beschreibung

Die vorliegende Erfindung betrifft ein Verfahren zur Herstellung von elektrostatisch nicht aufladbaren oder/und elektrisch ableitenden Kunststoff-Behältern und einen danach hergestellten mehrschichtigen Kunststoff-Behälter zur Lagerung und zum Transport von flüssigen Füllgütern, insbesondere für brennbare oder explosionsgefährliche Füllgüter. Der Kunststoffbehälter kann als Kanister oder Fassett, als geschlossenes Spundfass, als Deckelfass mit Fassdeckel und Spannringverschluss oder als Innenbehälter eines großvolumigen Palettencontainers ausgebildet sein.

### Stand der Technik:

Im Markt bekannt und für den Einsatz in Explosionsschutzzonen oder zur Befüllung mit brennbaren Füllgütern in Anwendung befindliche Systeme sind z. B. Palettenbehälter mit einem im Mehrschichtverfahren hergestellten Innenbehälter aus Kunststoff mit einer leitfähigen oder/und permanent antistatischen Außenschicht bei welchem die Erdung des Füllguts über entsprechende Maßnahmen im Bodenbereich des Behälters, wie z. B. den Einsatz von Metallschrauben oder von leitfähigen Kunststoffen an der Auslaufarmatur erfolgt. Die entsprechenden Innenbehälter aus Kunststoff werden vornehmlich im 3-Schicht oder 6-Schicht Coextrusions-Verfahren hergestellt und weisen eine Gesamtwanddicke von ca. 2 - 3 mm auf. Die nach Abzug der leitfähigen bzw. permanent antistatischen Außenschicht verbleibende isolierende Restwandstärke liegt dabei unterhalb von 2 mm.

Im Bereich der Elektrik/Elektronik wird in der einschlägigen Fachliteratur und Normung (z. B. CENELEC TR 50404 Seite 10) eine Wandstärke isolierenden Materials von kleiner gleich 2 mm in Verbindung mit einem fest verbundenen elektrischen Leiter als ausreichend sicher angesehen, Aufladungen der gegenüberliegenden Oberfläche des Isolators zu vermeiden, welche bei entsprechender Entladung Füllgüter und Gase der Explosionsgruppen Gruppe IIA und IIB entzünden würden.

Die für den Einsatz in Explosionsschutzzonen bzw. die Befüllung mit entflammbaren Füllgütern konzipierten und im Einsatz befindlichen freitragenden Kunststoffgebinde, wie z. B. Fässer oder Kanister, werden ebenfalls vornehmlich im Mehrschichtverfahren hergestellt und zeichnen sich durch die Verwendung eines leitfähigen oder/und permanent antistatischen Kunststoffmaterials in der Außenschicht aus. In der WO 2005/040269 A wird ein mehrschichtiger Kunststoff-Behälter mit einer dauerhaft elektrostatisch nicht aufladbaren bzw elektrisch ableitbaren Außenschicht beschrieben, bei dem die dauerhaft elektrostatisch nicht aufladbaren bzw elektrostatisch ableitenden Eigenschaften der Außenschicht durch Zugabe und Einmischen eines besonderen Compounds auf Polymerbasis (kein schwarzfärbender Leitruß) in das Kunststoffmaterial der Außenschicht in begrenzter Menge derart eingestellt und die Schichtdicke der Außenschicht derart dünn ausgebildet ist, wobei die Durchsichtigkeit bzw. Durchscheinbarkeit der compoundierten Außenschicht nicht oder nur so wenig beeinträchtigt ist, dass die Füllstandshöhe einer in den Behälter eingefüllten Flüssigkeit ohne weiteres optisch erkennbar bleibt. Bei einem aus der WO 03/093116 A bekannten Behälter wird eine elektrische Erdung des Füllgutes über zusätzlich eingebrachte Erdungselemente aus leitfähigen Materialien erzielt, wie z. B. durch ein in den Behälter eingesetztes Pumprohr aus elektrisch leitendem Kunststoff, das mit der leitfähigen Außenschicht des Behälters in elektrisch leitender Verbindung steht.

Aus dem Dokument EP 1 401 071 A ist bereits ein Kunststofffass bekannt, das als Spundfass oder Deckelfass ausgebildet und als Ein- oder Mehrschichtbehälter durch Extrusionsblasformen hergestellt ist, wobei in den Fasskörper Abschnitte aus einem elektrisch leitenden Kunststoffmaterial integriert sind, die elektrische verbindungen zwischen der Innenfläche und der Oberfläche des Fasskörpers bilden. Dabei sind die elektrisch leitenden Abschnitte des Fasskörpers als Streifen ausgebildet, deren Stärke der gesamten Wandstärke des Fasskörpers entspricht. Nachteilig hierbei ist die vollständige Durchtrennung der gesamten Behälterwandung in Längsrichtung an einer oder mehreren Stellen, denn die Verbindung des elektrisch leitenden Kunststoff-Streifens mit dem Kunststoffmaterial der mehrschichtigen Behälterwandung stellt immer eine kritische durchgehende Schwachstelle bei höherer mechanischer Belastung des gefüllten Behälters dar. Sofern aus Gründen der Gesamtstabilität eines Behälters ein Überschreiten der Gesamtwandstärke deutlich über 2 mm hinaus erforderlich ist (die durchschnittliche Wandstärke eines 8,5 kg Spundfasses liegt im Mantelbereich z. B. bei ca. 3 - 3,5 mm), kann die Anforderung nach in direktem Kontakt zur leitfähigen Außenschicht stehenden isolierenden (Innen-) Schichten mit einer verbleibenden Reststärke von maximal 2,5 mm nur durch eine entsprechend dicke Außenschicht aus leitfähigem Material erzielt werden. Dies ist sowohl aus wirtschaftlichen als auch mechanischen Gesichtspunkten mit erheblichen Nachteilen behaftet, da entsprechend leitfähige Kunststoffe (z. B. durch Zugabe von Leitruß) einerseits vergleichsweise teuer sind und andererseits erheblich schlechtere Materialeigenschaften z. B. hinsichtlich ihrer Kältefallfestigkeit aufweisen.

Der vorliegenden Erfindung liegt die Aufgabe zugrunde, einen mehrschichtigen Kunststoffbehälter für den Einsatz in Explosionsschutzzonen und eine Befüllung mit brennbaren Füllgütern der Explosionsgruppe IIA und IIB derart weiter zu entwickeln, dass seine elektrostatische Eignung und eine verbesserte mechanische Festigkeit (Stabilität) unter Berücksichtigung einer guten Wirtschaftlichkeit auch bei dickwandigeren Behältern, d. h. bei Wandstärken größer 2 mm, gegeben ist.

Der erfindungsgemäße Kunststoff-Behälter wird als Mehrschichtbehälter vorzugsweise im Extrusionsblasformverfahren hergestellt und umfasst mindestens eine in die Wandung des Behälterkörpers integrierte (innenliegende, eingebettete) Schicht aus elektrisch leitendem Kunststoffmaterial, welche die verbleibende Restwandung in wenigstens zwei isolierende Kunststoffschichten mit Schichtdicken von jeweils kleiner als 2,5 mm unterteilt. Das verwendete Kunststoffmaterial dieser Schichten besteht aus HDPE-Kunststoff (High Density Poly Ethylen).
Es hat sich herausgestellt, dass bei einem derartigen Grundaufbau eine elektrostatische Aufladung der inneren Oberfläche der mit dem Füllgut in Berührung stehenden HDPE-Kunststoffschicht nicht oder nur in ganz geringem Maße erfolgt, wenn diese innenseitige, isolierende und nicht leitende Kunststoffschicht eine Schichtdicke von weniger als 2,5 mm bzw. 2 mm aufweist. Dadurch, daß hinter der auf der Behälterinnenseite angeordneten isolierenden Schicht großflächig eine elektrisch sehr gut leitende Kunststoffschicht angeordnet ist, werden entstehende elektrische Ladungen auf kürzestem Wege (kleiner gleich 2,5 mm) durch die an sich isolierende Kunststoffschicht hindurchtransportiert und von der direkt dahinter angeordneten elektrisch leitenden Schicht sozusagen "aufgesogen". Wenn die elektrisch leitende Kunststoffschicht genügend elektrische Ladung aufgenommen hat und eine ausreichend hohe Ladungsträgerkonzentration erreicht ist, werden diese Ladungsträger über die äußere isolierende Kunststoffschicht mit einer Schichtdicke von weniger als 2,5 mm bzw. 2 mm über eine elektrisch ableitende Standfläche des Kunststoffbehälters auf einfache Weise in den Boden abgeleitet.
Bei der erfindungsgemäßen Behälterwandung werden die negativ geladenen Elektronen/Ladungsträger, die eine elektrische Aufladung der inneren Oberfläche des Kunststoffbehälters bewirken, aufgrund der großflächigen Kontakt-/Berührungsfläche der beiden Schichten in Radialrichtung über eine sehr kurze Distanz (kleiner/gleich 2,5 mm) durch die aus HDPE-Neumaterial bestehende Schicht hindurchgesogen und von dem elektrischen Leiter aufgenommen und dort angesammelt. Das Ladungsgefälle von innen (hoch) nach außen (niedrig) bewirkt das Abwandern der Ladungsträger durch die "isolierende Schicht" radial nach außen. Die elektrisch leitende Eigenschaft der elektrisch leitenden Kunststoffschicht wird durch Zumischen von Leitruß-Compounds eingestellt. Da Leitruß sehr teuer ist, wird die elektrisch leitende Kunststoffschicht in aller Regel nur sehr dünn ausgebildet (kleiner/gleich 5% der Gesamtwandstärke).

Da der erfindungsgemäße Kunststoff-Behälter für empfindliche und teure Chemikalien verwendet werden soll, ist es zweckmäßig, daß die mit dem flüssigen Füllgut in Berührung kommende innerste Schicht aus HDPE-Neumaterial (virgin material) besteht und die zweite, von der innersten Neumaterial-Schicht abgedeckte integrierte HDPE-Schicht durch entsprechende Zusätze (wie z. B. Leitruß) elektrisch leitfähig ausgebildet ist, wobei diese elektrisch leitfähige Schicht nach außen hin von wenigstens einer weiteren elektrisch nicht leitfähigen bzw. isolierenden HDPE-Schicht überdeckt ist. Bei einem Einsatz für hochsensible hochreine Flüssigkeiten für die Elektronikindustrie kann die mit diesem Füllgut in Kontakt kommende Materialschicht aus einem besonders reinen Kunststoffrohstöff bestehen, der völlig frei von jeglichen Verunreinigungen wie Katalysatoren und Stabilisatoren bzw. schädlichen Metallionen etc. ist und somit die hohen Reinheitsanforderungen für die besonderen Füllgüter erfüllt. Als Verunreinigungen des hochreinen Kunststoffmaterials werden hierbei insbesondere Katalysatorrückstände (catalyst residues), Füllmaterial (fillers), Stabilisierungszusätze (stabilizers), Antioxidantien (antioxidants), Weichmacher/Plastizierungsmittel (plastizers) oder Pozeßhilfsmittel (process aids), z. B. Stearate (stearates) usw. angesehen.

Die weitere, elektrisch nicht leitfähige bzw. isolierende HDPE-Schicht ist von einem schmalen vertikal verlaufenden Kunststoffstreifen aus elektrisch leitendem Kunststoffmaterial - nach Art eines Sichtstreifens - unterbrochen, der - in Radialrichtung betrachtet - nur die Stärke der weiteren, elektrisch nicht leitfähigen bzw. isolierenden HDPE-Schicht aufweist und mit der integrierten, elektrisch leitfähigen HDPE-Schicht in formschlüssiger und elektrisch leitender Verbindung steht. Hierbei weist der Kunststoff-Behälter weiterhin eine ununterbrochene, d. h. durchgehende innere Schicht aus HDPE-Neumaterial auf, die bei Bedarf möglichst dünn ausgestaltet ist und eine Wandstärke von nur 0,5 - 1 mm aufweist, so dass elektrische Ladungen gut "hindurchgesaugt" und von der "inneren" integrierten elektrisch leitfähigen Kunststoffschicht aufgenommen werden können. Diese integrierte elektrisch leitende Kunststoffschicht steht nun zur Weiterleitung der abgesaugten elektrischen Ladungen über den schmalen vertikal verlaufenden Kontakt-Streifen aus elektrisch leitendem Kunststoffmaterial, der verfahrenstechnisch nach Art eines bekannten Sichtstreifens in die äußere, elektrisch nicht leitfähige bzw. isolierende HDPE-Schicht eingebracht ist und im Bodenbereich des Behälters bis an die Trennnaht verläuft, in sehr guter elektrisch leitender Verbindung mit einer elektrisch ableitenden Standfläche des Kunststoffbehälters.
Um die elektrische Ableitfähigkeit des Behälters weiter zu verbessern, weist dieser in einem weiteren Ausführungsbeispiel einen vierschichtigen Wandungsaufbau auf, wobei die vierte Kunststoff-Schicht die bisherigen drei Schichten von außen überdeckt und ebenfalls aus elektrisch leitendem HDPE-Kunststoffmaterial besteht. Dadurch werden elektrische Ladungen, die sich in der integrierten (eingebetteten) elektrisch leitenden Kunststoffschicht angesammelt haben, ebenfalls großflächig durch die dritte, aus nicht leitendem Kunststoffmaterial bestehende Schicht hindurchgesaugt und über die äußere elektrisch leitende Schicht des Kunststoff-Behälters über dessen Standfläche in den Boden abgeleitet. Dabei kann weiterhin vorgesehen sein, dass die dritte, aus nicht leitendem Kunststoffmaterial bestehende Schicht ebenfalls von einem schmalen vertikal verlaufenden Kontakt-Streifen aus elektrisch leitendem Kunststoffmaterial - nach Art eines Sichtstreifens - unterbrochen ist, der- in Radialrichtung betrachtet- nur die Stärke der elektrisch nicht leitfähigen bzw. isolierenden HDPE-Schicht aufweist, und der quasi als Leiter-Brücke dient und die integrierte innere Kunststoffschicht aus elektrisch leitendem Kunststoffmaterial mit der vierten äußeren Schicht aus elektrisch leitendem Kunststoffmaterial in direkte elektrisch leitende Verbindung bringt.

Um ein Ableiten der angesammelten Ladungsträger aus der integrierten inneren elektrisch leitenden Kunststoffschicht zu fördern und zu beschleunigen ist erfindungsgemäß vorgesehen, daß in die äußere, elektrisch leitfähige Kunststoffschicht und die dahinter liegende elektrisch nicht leitfähige bzw. isolierende HDPE-Schicht wenigstens ein schmaler vertikal verlaufender Kunststoffstreifen aus elektrisch leitendem Kunststoffmaterial - eingesetzt ist, der - in Radialrichtung betrachtet - nur die Stärke der beiden Schichten aufweist und mit der innenliegenden integrierten, elektrisch leitfähigen HDPE-Schicht in formschlüssiger und elektrisch leitender Verbindung steht.
Der einteilig (einstückig) im Extrusionsblasformverfahren hergestellte Kunststoffbehälter wird mit mindestens drei Schichten, für besondere Anwendungsfälle auch in vier oder sieben Schichten ausgeführt und zeichnet sich durch folgenden Schichtaufbau aus:

| **3-Schicht** (Schichtnummerierung von innen nach außen aufsteigend): | | |
|---|---|---|
| *Schicht* | *Schichtdicke* | *Schichtmaterial* |
| 1 innen | < 2,5 mm | Isolierender Kunststoff (HDPE Neuware) |
| 2 | < 5 % der Gesamtwandstärke | Elektrisch leitfähiger Kunststoff |
| 3 außen | < 2.5 mm | Isolierender Kunststoff (HDPE) |

| **4-Schicht** (Schichtnummerierung von innen nach außen aufsteigend) : | | |
|---|---|---|
| *Schicht* | *Schichtdicke* | *Schichtmaterial* |
| 1 innen | < 2,5 mm (bis ca. 45 %) | Isolierender Kunststoff (HDPE Neuware) |
| 2 | < 5% der Gesamtwandstärke | Elektrisch leitfähiger Kunststoff |
| 3 | < 2,5 mm (bis ca. 45 %) | Prozeßregenerat + isolierender Kunststoff (HDPE) |
| 4 außen | < 5% der Gesamtwandstärke | Leitfähiger Kunststoff (HDPE) |
| | | |

| **7-Schicht** (Schichtnummerierung von innen nach außen aufsteigend): | | |
|---|---|---|
| *Schicht* | *Schichtdicke* | *Schichtmaterial* |
| 1 innen | < 2,5 mm (bis ca. 45 %) | Isolierender Kunststoff (HDPE Neuware) |
| 2 | < 5% der Gesamtwandstärke | Elektrisch leitfähiger Kunststoff |
| 3 | < 2,5 mm (bis ca. 45 %) der Gesamtwandstärke | Isolierender Haftvermittler (Admer) ca. 3 % |
| 4 | | Isolierender Barrierekunststoff (Polyamid PA oder EVOH) ca. 3 % |
| 5 | | Isolierender Haftvermittler (Admer) ca. 3 % |
| 6 | | Prozeßregenerat + isolierender Kunststoff (HDPE) |
| 7 außen | < 5% der Gesamtwandstärke | Isolierender Kunststoff (HDPE) u. Farbe |

Hierbei kommt ein empfindliches Füllgut in vorteilhafter Weise nicht mit der elektrisch leitenden Kunststoffschicht (mit Leitruß) in Berührung.
Der entsprechende Schichtenaufbau gewährleistet, daß die maximal auftretende Schichtdicke der isolierenden Kunststoffschichten in der Gesamtwandung unterhalb der Stärke von 2,5 mm liegt und somit eine kritische elektrische Aufladung freiliegender isolierender Oberflächen ausgeschlossen ist. Der Verbrauch des kostenintensiven leitfähigen Kunststoffmaterials wird durch die möglichst dünne Ausführung der entsprechenden Schichten reduziert. Dabei verhalten sich die sehr dünnen Schichten aus leitfähigen Kunststoffmaterial wesentlich flexibler als eine dicke, sprödbruchempfindliche Kunststoffschicht mit Leitruß an der Außenseite eines entsprechenden Behälters, so daß dadurch die Kältefallfestigkeit erheblich verbessert wird. Hierzu sei angemerkt, daß der Zusatz von Leitruß - wie allgemein bekannt ist - die mechanischen Eigenschaften von elektrisch leitenden Kunststoffen erheblich verschlechtern kann.

Um das potentielle Füllgut im Behälterinneren über eine direkte elektrische Verbindung von der Innenoberfläche zur Außenoberfläche zu erden, kann der erfindungsgemäße Behälter in der Ausführung mit elektrisch leitfähigen Kunststoffschichten darüber hinaus dahingehend ausgeführt werden, daß die isolierenden Kunststoffschichten partiell durch leitfähiges Kunststoffmaterial unterbrochen bzw. überbrückt und somit die leitfähigen Schichten innerhalb der Behälterwandung untereinander leitend verbunden werden. Wesentliches Merkmal dieser lokalen Schichtunterbrechung ist, daß die partielle Unterbrechung einer Schicht nicht in radialer Richtung zur Unterbrechung anderer Schichten oder aller Schichten vollzogen wird, so daß keine, in der gesamten Wandungsstärke ausgeprägte, durchgehende leitfähige Verbindung entsteht. Durch diese vorteilhafte Ausführung wird wiederum gewährleistet, daß mechanische Schwachstellen in Form von durchgängigen Materialanhäufungen (in Radialrichtung wie in Axialrichtung) des spröden leitfähigen Kunststoffs bei ähnlichen heute bekannten Lösungsansätzen (DE 102 42 955 Sch.) vermieden werden und die Fallfestigkeit entsprechend ausgeführter Behälter erheblich verbessert wird.
Die Ausführung der lokal begrenzten leitfähigen Streifen innerhalb der nicht leitfähigen isolierenden Kunststoffschichten der Behälterwandung erfolgt vorzugsweise parallel zur Faßlängsachse in Vertikalrichtung über den Faßkörper und radial über den Unter-/Oberboden des Behälters. Auch andere, z. B. punkt- oder spiralförmige Ausführungen der leitfähigen Kontaktstreifen sind möglich.
Die Anzahl der lokalen leitfähigen Verbindungsstellen ist auf wenigstens eine pro isolierender Schicht festgelegt. Weitere lokale leitfähige Verbindungsstreifen pro Schicht sind ohne weiteres möglich und können je nach verfahrenstechnischer Umsetzung zum Einsatz kommen.

Die Position der lokalen leitfähigen Verbindungsstreifen ist - in Umfangsrichtung gesehen - für verschiedene, zueinander versetzt angeordnete Ausführungen in den einzelnen isolierenden Schichten frei wählbar.
Bei der bevorzugten verfahrenstechnischen Ausführung als zur Faßachse parallele bzw. vertikale Streifen in der Behälterwandung ist eine um ca. 10 Grad aus der Formtrennnaht versetzte Positiorierung vorteilhaft. In der entsprechenden Anordnung zueinander sind die beiden lokalen leitfähigen Streifen in den einzelnen Schichten um 180° zueinander versetzt angeordnet.

Die Erfindung wird nachfolgend anhand von in den Zeichnungen schematisch dargestellten Ausführungsbeispielen näher erläutert und beschrieben. Es zeigen:
- Figur 1: einen erfindungsgemäßen Kunststoffbehälter als 220 IL-Ringfaß,
- Figur 2: einen 3-Schicht-Aufbau mit leitfähiger Mittelschicht,
- Figur 3: einen 4-Schicht-Aufbau mit leitfähiger Mittelschicht,
- Figur 4: einen erfindungsgemäßen 7-Schicht-Aufbau mit leitfähiger Mittelschicht,
- Figur 5: einen 4-Schicht-Aufbau mit leitfähiger Mittelschicht und lokalen leitfähigen Streifen in den isolierenden Schichten und
- Figur 6: einen 7-Schicht-Aufbau mit leitfähiger Mittelschicht und lokalen leitfähigen Streifen in den isolierenden Schichten.

Der erfindungsgemäße Kunststoffbehälter kann z. B. als Kanister bzw. Fassett, als Spundfaß, als Deckelfaß mit Faßdeckel und Spannringverschluß oder als Innenbehälter eines großvolumigen Palettencontainers ausgebildet sein. In aller Regel weist ein derartiger Kunststoffbehälter vertikal verlaufende Behälterwandungen mit horizontal verlaufendem Behälteroberboden und -unterboden auf, wobei wenigstens im Behälteroberboden bzw. im Behälterdeckel eine gas- und flüssigkeitsdicht verschließbare Einfüll- und Entleerungsöffnung angeordnet ist.

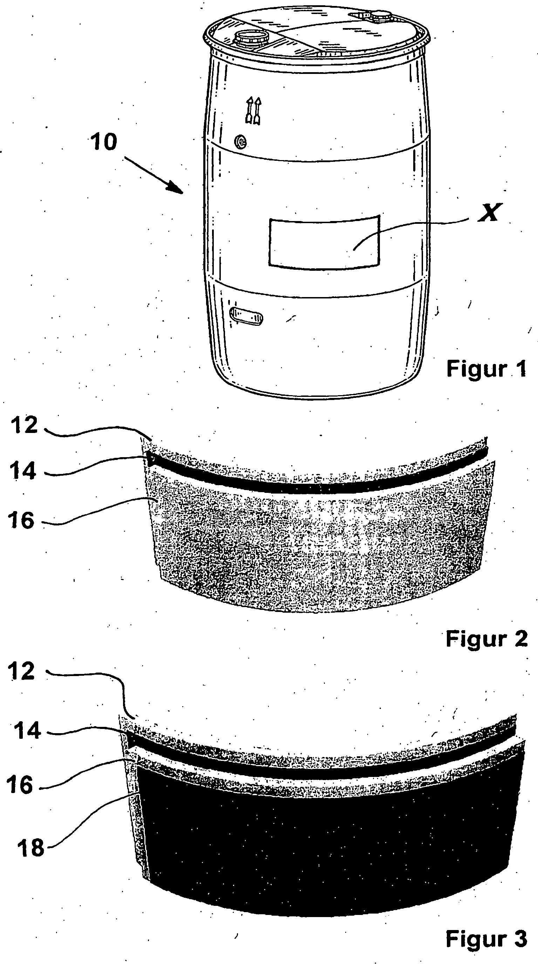

In Figur 1 ist als Ausführungsbeispiel ein 220 Liter Spundfaß dargestellt und mit der Bezugsziffer 10 bezeichnet. Die durchschnittliche Gesamtwandstärke dieses Spundfasses beträgt bei einem normalen Gewicht von 8,5 kg im Mantelbereich ca. 3 mm bis 3,5 mm. Bei einer schwereren Ausführung (US-Version) eines 220 Liter Spundfasses (55 US-Gallonen) mit einem Gewicht von über 10 kg beträgt die durchschnittliche Gesamtwandstärke ca. 3,5 mm bis 4,5 mm. In der vertikalen Behälterwandung des Spundfasses 10 ist ein rechteckiges Wandungsstück mit "X" bezeichnet, dessen Wandungsaufbau in den nachfolgenden Zeichnungen in verschiedenen Ausführungsvarianten näher erläutert und beschrieben wird. Als Neuware (virgin material) für die Innern- oder/und Außenschicht bzw. zum Vermischen mit Regeneratmaterial (Butzenmaterial bzw. Mahlgut) wird vorzugsweise High Density Poly Ethylen (HD-PE z. B. Lupolen 5021 D) oder High Molekular Poly Ethylen (HM-PE z. B. Lupolen 5261 Z) eingesetzt.
Bei einem ersten Ausführungsbeispiel ist das rechteckige Wandungsstück "X" in Figur 2 mit einem dreischichtigen Wandungsaufbau gezeigt, bei dem die innere, mit dem Füllgut in Berührung kommende Schicht 12 aus HDPE-Neuware, die mittlere dünne Schicht 14 durch Zugabe von Leitruß aus elektrisch leitfähigem HD-PE Kunststoff und die äußere Schicht 16 wiederum aus HD-PE Neuware, gegebenenfalls mit eingemischten, z. B. blauen Farbpigmenten, besteht.
Eine besonders bevorzugte Ausführungsform ist in Figur 3 mit einem erfindungsgemäßen vierschichtigem Wandungsaufbau mit dünner leitfähiger Innenschicht dargestellt. Die mit dem Füllgut in Berührung kommende, innenseitige Schicht 12 besteht wiederum aus isolierendem Kunststoff (HD-PE Neuware) mit einer Schichtdicke von hier ca. 0,5 mm (die bis ca. 45 % der Gesamtwandstärke betragen kann), die folgende integrierte dünne Schicht 14 besteht aus elektrisch leitfähigem HD-PE Kunststoff mit einer Schichtdicke von kleiner 5 % der Gesamtwandstärke, die dritte, nun ebenfalls innenliegende Schicht 16 besteht aus Prozeßregenerat und isolierendem Kunststoff (HD-PE Neuware) mit einer Schichtdicke von ca. 1,5 mm bzw. bis ca. 45 % der Gesamtwandstärke und die äußere vierte Schicht 18 (an der Außenseite des Kunststoff-Behälters) besteht wiederum aus leitfähigem Kunststoff (HD-PE mit Leitruß) mit einer geringen Schichtdicke von kleiner 5 % der Gesamtwandstärke.

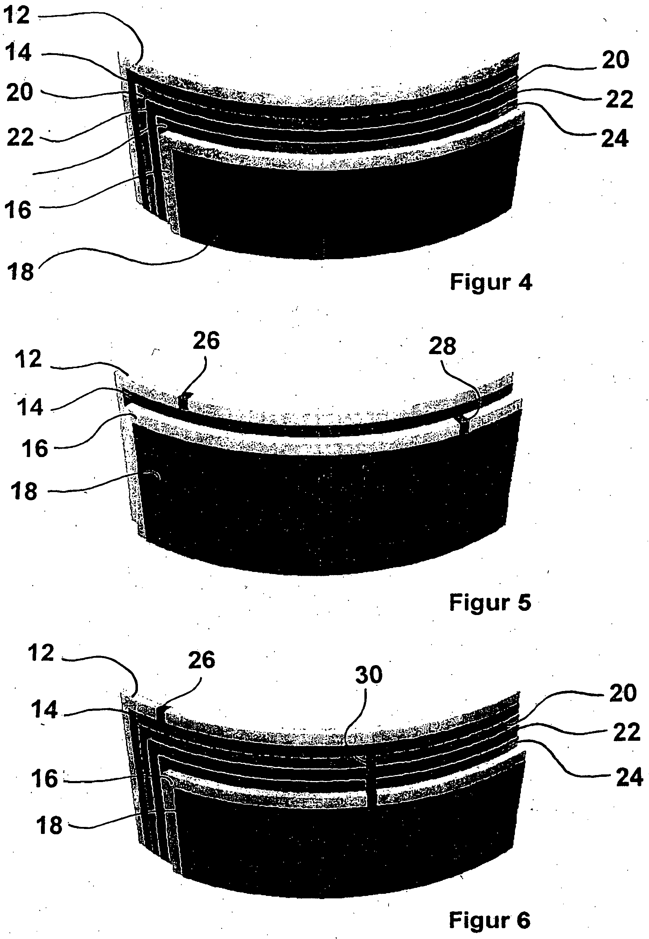

Ein weiter ausgebildete Ausführungsbeispiel ist in Figur 4 dargestellt. Hierbei ist der Wandungsaufbau (gemäß Fig. 3) zur Erreichung von optimalen Barriereeigenschaften gegen ein Entweichen von flüchtigen Bestandteilen (z. B. Kohlenwasserstoffe, Kohlendioxid, Aromastoffe o. ä.) aus dem Füllgut noch um drei weitere dünne Schichten 20, 22 und 24 ergänzt, die zwischen der vergleichsweise dünnen elektrisch leitfähigen Schicht 14 und der vergleichsweise dicken Schicht 16 angeordnet sind. Dabei besteht die Schicht 22 aus isolierendem Barrierekunststoff (Polyamid PA oder EVOH) und die beiden benachbarten Schichten 20 und 24 bestehen aus isolierendem Haftvermittler (Admer), um eine stoffschlüßige Verbindung zwischen den verschiedenen Kunststoffmaterialien (HD-PE und Polyamid PA oder EVOH) zu erhalten, die anderenfalls bei direktem Kontakt ohne Haftvermittler nicht aneinanderhaften würden. Die Schichtdicke dieser drei Dünnschichten 20, 22 und 24 beträgt etwa jeweils nur 3 % der Gesamtwandstärke. Die EVOH-Schicht (Ethyl-Vinyl-Alkohol) ist eine an sich übliche als Gas- und Sauerstoff-Barrierematerial verwendete Sperrschicht.
Bei dem in Figur 5 dargestellten Ausführungsbeispiel handelt es sich wiederum um einen vierschichtigen Wandungsaufbau wie in Fig. 3, wobei hier allerdings in die isolierenden Kunststoffschichten 12 und 16 wenigstens zwei in Behälterlängsrichtung bzw. vertikal verlaufende Streifen 26 und 28 aus elektrisch leitendem Kunststoff eingebracht sind. Es könnten z. B. auch jeweils zwei dieser Streifen eingearbeitet sein. Die Streifen können eine Breite (in Umfangsrichtung) von ca. 10 mm bis 50 mm aufweisen. Diese Streifen 26 und 28 stellen zum einen eine elektrische Verbindungsbrücke zwischen dem flüssigen Füllgut und der inneren elektrisch leitenden Dünnschicht 14 und andererseits eine elektrische Verbindungsbrücke zwischen der inneren elektrisch leitenden Dünnschicht 14 und der elektrisch leitenden Dünnschicht bzw. Außenschicht 18 dar. Diese beiden als elektrische Erdung dienenden Streifen 26 und 28 werden nach an sich bekannter Art eines Sichtstreifens in den schlauchförmigen Vorformling eingebracht, der aus einer Ringdüse eines Umfangverteilers bzw. Extrusionsspeicherkopfes extrudiert und mittels Pressluft in einer Blasform zum fertigen Behälter aufgeblasen wird.
Im Unterschied zu einem an sich bekannten durchgehenden elektrisch leitenden Verbindungsstreifen, der wie ein Sichtstreifen - in Radialrichtung betrachtet - durch die gesamte Wandung hindurchgeht, erstrecken sich die beiden Streifen 26, 28 in Radialrichtung betrachtet jeweils nur partiell bzw. nicht vollständig durchgehend in der Wandung des jeweiligen Behälters. Zudem sind die beiden Streifen 26 und 28 auch seitlich voneinander beabstandet und an verschiedenen Umfangspositionen des Kunststoffbehälters versetzt zueinander angeordnet.
Schließlich ist diese Verfahrensvariante mit den wenigstens zwei in Vertikalrichtung verlaufenden und in Umfangsrichtung voneinander beabstandeten Kontakt-Streifen auch für einen Kunststoffbehälter mit siebenschichtigem Wandungsaufbau realisiert, wie in Figur 6 dargestellt ist. Der elektrisch leitende Kunststoffstreifen 26 verläuft auch hier nur innerhalb der dicken elektrisch nicht leitenden Kunststoffschicht 12 und stellt die elektrische Verbindung zwischen dem Füllgut und der inneren leitenden Dünnschicht 14 her, während der Streifen 30 sich nun radial über die Schichten 20, 22, 24 und 16 erstreckt und dadurch eine elektrische Brücke zwischen der integrierten elektrisch leitenden Dünnschicht 14 und der elektrisch leitenden dünnen Außenschicht 18 bildet. Dabei steht die innenliegende integrierte, elektrisch leitfähige HDPE-Schicht über wenigstens einen, in die innerste, mit dem Füllgut in Kontakt stehende Schicht aus isolierendem Kunststoff (HDPE Neuware) eingesetzten Kontaktstreifen aus elektrisch leitendem Kunststoff-material mit dem Füllgut im Behälterinneren in leitender Verbindung und weiterhin über wenigstens einen weiteren in die restlichen, die innenliegende integrierte, elektrisch leitfähige HDPE-Schicht von außen überdeckenden Schichten aus nicht leitendem Kunststoffmaterial (ohne Leitrußzusatz) eingesetzten Kontaktstreifen aus elektrisch leitendem Kunststoffmaterial mit in der äußeren, elektrisch leitenden Kunststoffschicht in elektrisch leitender Verbindung.

In Kombination mit ebenfalls in die verbleibenden isolierenden Restschichten integrierten lokalen Abschnitten aus leitfähigem Kunststoffmaterial kann also bei Bedarf eine elektrische Verbindung zwischen Innen- und Außenoberfläche des Behälters ausgebildet werden. Die Stärke der einzelnen lokalen Verbindung ist hierbei - in Radialrichtung betrachtet - kleiner als die Gesamtwandstärke des Behälters.
Durch die vorteilhafte Vermeidung von voll durchgehenden Streifen aus elektrisch leitendem Kunststoffmaterial wird die sonst in Kauf zu nehmende Verschlechterung der Kältefallfestigkeit stark vermindert.

Verfahrenstechnisch kennzeichnet sich die vorliegende Erfindung dadurch aus, daß aus wenigstens drei Extrudern drei verschiedene Kunststoffmaterialien in einen Umfangsverteiler eingefördert und darin zu einem wenigstens dreischichtigen schlauchförmigen Vorformling umgeformt werden, wobei die Innenschicht aus einem elektrisch nicht leitenden Kunststoffmaterial (HDPE-Neuware), die von der Innenschicht abgedeckte integrierte Schicht aus einem elektrisch leitenden Kunststoffmaterial (z. B. HDPE mit Leitrußzüsatz) und eine weitere äußere Schicht wiederum aus einem elektrisch nicht leitenden Kunststoffmaterial (HDPE) besteht, und wobei dieser schlauchförmige Vorformling in üblicher Weise in einer entsprechenden Blasform mittels Pressluft zu einem Kunststoff-Hohlkörper aufgeblasen wird. Der Umfangsverteiler ist zusätzlich mit geeigneten Mitteln versehen, um an gewünschter Stelle die Kontaktstreifen aus elektrisch leitendem Kunststoffmaterial in die innenseitigen oder/und außenseitigen Schichten aus elektrisch nicht leitfähigem Kunststoffmaterial einzubringen.

### Bezugsziffernliste

- **10**: 220 Liter Kunststoff-Spundfaß
- **12**: innere HDPE-Neuware-Schicht
- **14**: dünne elektrisch leitende Schicht
- **16**: isolierende bzw. elektrisch nicht-leitende Schicht
- **18**: dünne elektrisch leitende Schicht
- **20**: isolierender Haftvermittler (Admer)
- **22**: isolierender Barrierekunststoff (PA oder EVOH)
- **24**: isolierender Haftvermittler (Admer)
- **26**: Kontakt-Streifen aus elektrisch leitendem Kunststoff
- **28**: Kontakt-Streifen aus elektrisch leitendem Kunststoff
- **30**: Kontakt-Streifen aus elektrisch leitendem Kunststoff

## Patentansprüche

1. Mehrschichtiger Kunststoff-Behälter aus thermoplastischem Kunststoff, zur Lagerung und zum Transport von flüssigen Füllgütern, insbesondere für brennbare oder explosionsgefährliche Füllgüter, der aus wenigstens drei Schichten besteht und wenigstens eine dauerhaft elektrostatisch nicht aufladbare bzw. elektrisch ableitende Schicht aufweist, wobei eine in die Wandung des Behälterkörpers integrierte Schicht (14) aus elektrisch leitendem oder/und permanent antistatischem HDPE-Kunststoffmaterial vorgesehen ist, welche die verbleibende Restwandung in wenigstens zwei isolierende HDPE-Kunststoffschichten (12, 16) mit Schichtdicken von jeweils kleiner 2,5 mm unterteilt, und wobei die mit dem flüsigen Füllgut in Berührung kommende innerste Schicht (12) aus HDPE-Neumaterial besteht und die zweite, von der innersten Neumaterial-Schicht (12) abgedeckte integrierte HDPE-Schicht (14) durch entsprechende Zusätze (wie z.B. Leitruß) elektrisch leitfähig ausgebildet ist mit einer Leitfähigkeit zum Absaugen von statischen Aufladungen, wobei diese elektrisch leitfähige Schicht (14) nach außen hin von wenigstens einer weiteren elektrisch nicht leitfähigen bzw. isolierenden HDPE-Schicht (16) überdeckt ist,
**dadurch gekennzeichnet, dass**
die weitere, elektrisch nicht leitfähige bzw. isolierende HDPE-Schicht (16) von einem schmalen vertikal verlaufenden Kunststoffstreifen (28) aus elektrisch leitendem Kunststoffmaterial - nach Art eines Sichtstreifens - unterbrochen ist, der - in Radialrichtung betrachtet - nur die Stärke der weiteren, elektrisch nicht leitfähigen bzw. isolierenden HDPE-Schicht (16) aufweist und mit der integrierten, elektrisch leitfähigen HDPE-Schicht (14) in formschlüssiger und elektrisch leitender Verbindung steht.

2. Kunststoff Behälter nach Anspruch 1,
**gekennzeichnet durch,**
einen vierschichtigen Wandungsaufbau, wobei die vierte Kunststoff-Schicht (18), die bisherigen drei Schichten (12, 14, 16) von außen überdeckt und ebenfalls aus elektrisch leitendem HDPE-Kunststoffmaterial besteht.

3. Kunststoff-Behälter nach Anspruch 1 oder 2,
**dadurch gekennzeichnet, dass**
die innerste, mit dem Füllgut in Kontakt kommende Schicht (12) aus isolierendem Kunststoff (HDPE Neuware) eine Stärke von kleiner/gleich 2,5 mm (bis ca. 45 % der Gesamtwandstärke) aufweist, die integrierte elektrisch leitfähige Kunststoffschicht (14) eine Wandstärke von kleiner/gleich 5 % der Gesamtwandstärke aufweist, die weitere, elektrisch nicht leitfähige bzw. isolierende HDPE-Schicht (16) ebenfalls eine Stärke von kleiner/gleich 2,5 mm (bis ca. 45 % der Gesamtwandstärke) aufweist und die äußere, elektrisch leitfähige Kunststoffschicht (18) wiederum eine Wandstärke von kleiner/gleich 5 % der Gesamtwandstärke aufweist.

4. Kunststoff-Behälter nach Anspruch 1, 2, oder 3,
**dadurch gekennzeichnet, dass**
in die äußere, elektrisch leitfähige Kunststoffschicht (18) und die dahinter liegende elektrisch nicht leitfähige bzw. isolierende HDPE-Schicht (16) wenigstens ein schmaler vertikal verlaufender Kunststoffstreifen (28) aus elektrisch leitendem Kunststoffmaterial eingesetzt ist, der - in Radialrichtung betrachtet - nur die Stärke der beiden Schichten (16, 18) aufweist und mit der innenliegenden integrierten, elektrisch leitfähigen HDPE-Schicht (14) in formschlüssiger und elektrisch leitender Verbindung steht.

5. Kunststoff-Behälter nach Anspruch 1, 2, 3 oder 4,
**dadurch gekennzeichnet, dass**
in die innerste, mit dem Füllgut in Kontakt stehende Schicht (12) aus isolierendem Kunststoff (HDPE Neuware) wenigstens ein schmaler vertikal verlaufender Kunststoffstreifen (26) aus elektrisch leitendem Kunststoffmaterial eingesetzt ist, der - in Radialrichtung betrachtet - nur die Stärke dieser Schicht (12) aufweist und mit der innenliegenden integrierten, elektrisch leitfähigen HDPE-Schicht (14) in formschlüssiger und elektrisch leitender Verbindung steht.

6. Kunststoff-Behälter nach einem der vorhergehenden Ansprüche 1 bis 5,
**dadurch gekennzeichnet, dass**
zwischen der innenliegenden integrierten, elektrisch leitfähigen HDPE-Schicht (14) und der diese abdeckenden elektrisch nicht leitfähigen bzw. isolierenden HDPE-Schicht (16) (aus Neumatarial oder/und Regrindmaterial) eine sogenannte "Barriereschicht" aus Polyamid PA oder EVOH gegebenenfalls zwei Admer/Haftvermittler-Schichten (20, 22, 24) angeordnet ist.

7. Kunststoff-Behälter nach einem der vorhergehenden Ansprüche 1 bis 6,
**dadurch gekennzeichnet, dass**
die innenliegende integrierte, elektrisch leitfähige HDPE-Schicht (14) über wenigstens einen, in die innerste, mit dem Füllgut in Kontakt stehende Schicht (12) aus isolierendem Kunststoff (HDPE Neuware) eingesetzten Kontaktstreifen (26) aus elektrisch leitendem Kunststoffmaterial mit dem Füllgut im Behälterinneren in leitender Verbindung steht und über wenigstens einen weiteren in die restlichen, die innenliegende integrierte, elektrisch leitfähige HDPE-Schicht (14) von außen überdeckenden Schichten (16, 20, 22, 24) aus nicht leitendem Kunststoffmaterial (ohne Leitrußzusatz) eingesetzten Kontaktstreifen (30) aus elektrisch leitendem Kunststoffmaterial mit in der äußeren, elektrisch leitenden Kunststoffschicht (18) in elektrisch leitender Verbindung steht. Pressluft zu einem Kunststoff-Hohlkörper aufgeblasen wird.

8. Verfahren zur Herstellung eines mehrschichtigen Kunststoff-Behälters,
nach wenigstens einem der vorhergehenden Ansprüche 1 bis 7,
**dadurch gekennzeichnet, dass**
aus wenigstens drei Extrudern drei verschiedene Kunststoffmaterialien in einen Umfangsverteiler eingefördert und darin zu einem wenigstens dreischichtigen schlauchförmigen Vorformling umgeformt werden,
wobei die Innenschicht aus einem elektrisch nicht leitenden Kunststoffmaterial (HDPE-Neuware), die von der Innenschicht abgedeckte integrierte Schicht aus einem elektrisch leitenden Kunststoffmaterial (z. B. HDPE mit Leitrusszusatz) mit einer Leitfähigkeit zum Absaugen von statischen Aufladungen und eine weitere äußere Schicht wiederum aus einem elektrisch nicht leitenden Kunststoffmaterial (HDPE) besteht, wobei in diese weitere äußere Schicht aus elektrisch nicht leitenden Kunststoffmaterial ein schmaler, in Längsrichtung verlaufender Streifen aus einem elektrisch leitenden Kunststoffmaterial eingefügt ist, der nur eine Schichtdicke wie die Schicht aus dem elektrisch nicht leitenden Kunststoffmaterial aufweist,
und wobei dieser schlauchförmige Vorformling in einer entsprechenden Blasform mittels Pressluft zu einem Kunststoff-Hohlkörper aufgeblasen wird.

## Claims

1. Multilayer thermoplastic container for storing and transporting liquid contents, in particular for flammable or explosive contents, which is made of at least three layers and has at least one layer that is durably electrostatically non-chargeable or electrically discharging, wherein a layer (14) integrated into the wall of the container body and made of electrically conductive and/or permanently antistatic HDPE plastic material is provided, which divides the remaining residual wall into at least two insulating HDPE plastic layers (12, 16), with each layer having a thickness of less than 2.5 mm, and wherein the innermost layer (12) coming into contact with the liquid content is made of HDPE virgin material and the second integrated HDPE layer (14), which is covered by the innermost virgin material layer (12), is rendered electrically conductive by suitable additives (e.g., conductive carbon black) with a conductivity for suction of static charges, wherein this electrically conductive layer (14) is covered on the outside by at least one additional electrically non-conductive or insulating HDPE layer (16), **characterized in that**
the additional, electrically non-conductive or insulating HDPE layer (16) is interrupted by a narrow, vertically extending plastic strip (28) made of electrically conductive plastic material - in the manner of a viewing strip - which - when viewed in the radial direction - has only the thickness of the additional, electrically non-conductive or insulating HDPE layer (16) and has a positive and electrically conductive connection with the integrated, electrically conductive HDPE layer (14).

2. Plastic container according to claim 1,
**characterized by**
a four-layer wall construction, wherein the fourth plastic layer (18) externally covers the existing three layers (12, 14, 16) and is also made of electrically conductive HDPE plastic material.

3. Plastic container according to claim 1 or 2,
**characterized in that**
the innermost layer (12) made of insulating plastic (HDPE virgin material) and coming into contact with the content has a thickness of less than/equal to 2.5 mm (up to about 45% of the total wall thickness), the integrated electrically conductive plastic layer (14) has a wall thickness of less than/equal to 5% of the total wall thickness, the additional, electrically non-conductive or insulating HDPE layer (16) also has a thickness of less than/equal to 2.5 mm (up to about 45% of the total wall thickness), and the outer, electrically conductive plastic layer (18) also has a wall thickness of less than/equal to 5% of the total wall thickness.

4. Plastic container according to claim 1,2 or 3,
**characterized in that**
at least one narrow, vertically extending plastic strip (28) made of electrically conductive plastic material is inserted in the outer, electrically conductive plastic layer (18) and the following, electrically non-conductive or insulating HDPE layer (16), wherein the strip (28) - when viewed in the radial direction - has only the thickness of the two layers (16, 18) and has a positive and electrically conductive connection with the inner integrated, electrically conductive HDPE layer (14).

5. Plastic container according to claim 1, 2, 3 or 4,
**characterized in that**
at least one narrow, vertically extending plastic strip (26) made of electrically conductive plastic material is inserted in the innermost layer (12) which is in contact with the content and is made of insulating plastic (HDPE virgin material), wherein the strip (26) - when viewed in the radial direction - has only the thickness of this layer (12) and has a positive and electrically conductive connection with the inner integrated, electrically conductive HDPE layer (14).

6. Plastic container according to one of the preceding claims 1 to 5,
**characterized in that**
a so-called "barrier layer" made of polyamide PA or EVOH, optionally two admer/bonding agent layers (20, 22, 24), is arranged between the inner integrated, electrically conductive HDPE layer (14) and the covering electrically non-conductive or insulating HDPE layer (16) (made of virgin material and/or regrind material).

7. Plastic container according to one of the preceding claims 1 to 6,
**characterized in that**
the inner integrated, electrically conductive HDPE layer (14) is in conductive connnection with the content disposed in the interior of the container via at least one contact strip (26), which is made of electrically conductive plastic material and which is inserted into the innermost layer (12) made of insulating plastic (HDPE virgin material) and in contact with the content, and the inner integrated, electrically conductive HDPE layer (14) is in electrically conductive connection with the outer electrically conductive plastic layer (18) via at least one additional contact strip (30) inserted into the remaining layers (16, 20, 22, 24) made of non-conductive plastic material (without addition of conductive carbon black) that externally cover the inner integrated, electrically conductive HDPE layer (14).

8. Method for producing a multilayer plastic container, according to at least one of the preceding claims 1 to 7,
**characterized in that**
three different plastic materials are supplied from at least three extruders to a peripheral manifold where they are formed into an at least three-layer tubular preform, wherein the inner layer is made of an electrically non-conductive plastic material (HDPE virgin material), the integrated layer covered by the inner layer is made of an electrically conductive plastic material (e.g., HDPE with addition of conductive carbon black) with a conductivity for suction of static charges, and an additional outer layer which is also made of an electrically non-conductive plastic material (HDPE), wherein in this additional outer layer of electrically non-conductive plastic material there is inserted a narrow strip of an electrically conductive plastic material extending in the longitudinal direction, which strip has only the layer thickness of the layer of the electrically non-conductive plastic material,
and wherein this tubular preform is expanded in a corresponding blow mold with compressed air to give a hollow plastic body.

## Revendications

1. Récipient en matière plastique multicouche en thermoplastique destiné au stockage et au transport de produits de remplissage liquides, notamment pour des produits de remplissage inflammables ou explosifs, lequel se compose d'au moins trois couches et possède au moins une couche qui ne peut pas accumuler une charge électrostatique durable ou qui est électriquement dérivative, une couche (14) intégrée dans la paroi du corps de récipient en un matériau électriquement conducteur et/ou une matière plastique HDPE antistatique en permanence étant prévue, laquelle subdivise la paroi résiduelle restante en au moins deux couches en matière plastique HDPE isolante (12, 16) ayant des épaisseurs de couche respectives inférieures à 2,5 mm, et la couche (12) la plus à l'intérieur qui vient en contact avec le produit de remplissage liquide étant constituée de matériau nouveau HDPE et la deuxième couche en HDPE (14) intégrée, recouverte par la couche en matériau nouveau (12) la plus à l'intérieur, étant réalisée électriquement conductrice par des additifs correspondants (comme par exemple du noir de carbone conducteur) avec une conductivité destinée à l'aspiration des charges statiques, cette couche (14) électriquement conductrice étant recouverte vers l'extérieur par au moins une couche en HDPE (16) supplémentaire électriquement non conductrice ou isolante,
**caractérisé en ce que**
la couche en HDPE (16) supplémentaire électriquement non conductrice ou isolante est interrompue par une mince bande de matière plastique (28) en matière plastique électriquement conductrice qui s'étend verticalement, à la manière d'une bande apparente, qui, vue dans le sens radial, ne présente que l'épaisseur de la couche en HDPE (16) supplémentaire électriquement non conductrice ou isolante et qui est en liaison par complémentarité de formes et électriquement conductrice avec la couche (14) électriquement conductrice intégrée.

2. Récipient en matière plastique selon la revendication 1, **caractérisé par** une structure de paroi à quatre couches, la quatrième couche en matière plastique (18) recouvrant les trois couches (12, 14, 16) antérieures depuis l'extérieur et étant constituée elle aussi de matière plastique HDPE électriquement conductrice.

3. Récipient en matière plastique selon la revendication 1 ou 2, **caractérisé en ce que** la couche (12) la plus à l'intérieur qui vient en contact avec le produit de remplissage en matière plastique isolante (matériau nouveau HDPE) présente une épaisseur inférieure ou égale à 2,5 mm (au maximum environ 45 % de l'épaisseur totale de la paroi), la couche en matière plastique (14) électriquement conductrice intégrée présente une épaisseur de paroi inférieure ou égale à 5 % de l'épaisseur totale de la paroi, la couche en HDPE (16) supplémentaire électriquement non conductrice ou isolante présente également une épaisseur inférieure ou égale à 2,5 mm (au maximum environ 45 % de l'épaisseur totale de la paroi) et la couche en matière plastique (18) la plus à l'extérieur électriquement conductrice présente à son tour une épaisseur de paroi inférieure ou égale à 5 % de l'épaisseur totale de la paroi.

4. Récipient en matière plastique selon la revendication 1, 2 ou 3, **caractérisé en ce qu'**au moins une mince bande en matière plastique (28) en matière plastique électriquement conductrice qui s'étend verticalement est insérée dans la couche en matière plastique (18) la plus à l'extérieur électriquement conductrice et la couche en HDPE (16) électriquement non conductrice ou isolante qui se trouve derrière celle-ci, laquelle, vue dans le sens radial, ne présente que l'épaisseur des deux couches (16, 18) et se trouve en liaison par complémentarité de formes et électriquement conductrice avec la couche en HDPE (14) électriquement conductrice intégrée intérieure.

5. Récipient en matière plastique selon la revendication 1, 2, 3 ou 4, **caractérisé en ce qu'**au moins une mince bande en matière plastique (26) en matière plastique électriquement conductrice qui s'étend verticalement est insérée dans la couche (12) en matière plastique isolante (matériau nouveau HDPE) la plus à l'intérieur qui est en contact avec le produit de remplissage, laquelle, vue dans le sens radial, ne présente que l'épaisseur de cette couche (12) et se trouve en liaison par complémentarité de formes et électriquement conductrice avec la couche en HDPE (14) électriquement conductrice intégrée intérieure.

6. Récipient en matière plastique selon l'une des revendications 1 à 5, **caractérisé en ce qu'**entre la couche en HDPE (14) électriquement conductrice intégrée intérieure et la couche en HDPE (16) (en matériau nouveau et/ou en matériau rebroyé) électriquement non conductrice ou isolante qui recouvre celle-ci est disposée une couche dite de barrière en polyamide PA ou en EVOH, le cas échéant deux couches en Admer/agent adhésif (20, 22, 24).

7. Récipient en matière plastique selon l'une des revendications 1 à 6, **caractérisé en ce que** la couche en HDPE (14) électriquement conductrice intégrée intérieure se trouve en liaison conductrice avec le produit de remplissage à l'intérieur du récipient par le biais d'au moins une bande de contact (26) en matière plastique électriquement conductrice insérée dans la couche (12) en matière plastique isolante (matériau nouveau HDPE) la plus à l'intérieur qui est en contact avec le produit de remplissage, et se trouve en liaison électriquement conductrice avec la couche en matière plastique (18) la plus à l'extérieur électriquement conductrice par le biais d'au moins une bande de contact (30) en matière plastique électriquement conductrice insérée dans les couches (16, 20, 22, 24) en matière plastique non conductrice (sans additif à base de noir de carbone) restantes qui recouvrent depuis l'extérieur la couche en HDPE (14) électriquement conductrice intégrée intérieure.

8. Procédé de fabrication d'un récipient en matière plastique multicouche selon au moins l'une des revendications 1 à 7,
**caractérisé en ce que**
trois matières plastiques différentes issues d'au moins trois extrudeuses sont transportées dans un distributeur périphérique et sont façonnées dans celui-ci en une préforme en forme de boyau d'au moins trois couches,
la couche intérieure étant constituée d'une matière plastique électriquement non conductrice (matériau nouveau HDPE), la couche intégrée recouverte par la couche intérieure étant constituée d'une matière plastique électriquement conductrice (par exemple du HDPE avec un additif à base de noir de carbone) avec une conductivité destinée à l'aspiration des charges statiques et une couche plus à l'extérieur étant constituée à son tour d'une matière plastique électriquement non conductrice (HDPE), une mince bande en une matière plastique électriquement conductrice qui s'étend dans le sens longitudinal étant insérée dans cette couche plus à l'extérieur en matière plastique électriquement non conductrice, laquelle ne présente qu'une épaisseur de couche égale à celle de la couche en la matière plastique électriquement non conductrice, et cette préforme en forme de boyau étant gonflée au moyen d'air comprimé dans un moule de soufflage correspondant pour obtenir un corps creux en matière plastique.
